(19) Europäisches Patentamt
European Patent Office
Office européen des brevets

(11) EP 1 862 478 B1

(12) # EUROPEAN PATENT SPECIFICATION

(45) Date of publication and mention of the grant of the patent:
**25.01.2012 Bulletin 2012/04**

(21) Application number: **06715183.7**

(22) Date of filing: **03.03.2006**

(51) Int Cl.:
***C08F 2/44*** *(2006.01)* ***C08F 22/10*** *(2006.01)*
***C08L 101/00*** *(2006.01)*

(86) International application number:
**PCT/JP2006/304100**

(87) International publication number:
**WO 2006/093271 (08.09.2006 Gazette 2006/36)**

(54) **POLYMER PARTICLE, RESIN COMPOSITION CONTAINING SAME, AND MOLDED BODY**

POLYMERTEILCHEN, DIESES ENTHALTENDE HARZZUSAMMENSETZUNG UND FORMKÖRPER

PARTICULES DE POLYMÈRE, COMPOSITION DE RÉSINE CONTENANT CELLES-CI ET CORPS MOULÉ

(84) Designated Contracting States:
**DE**

(30) Priority: **03.03.2005 JP 2005059176**

(43) Date of publication of application:
**05.12.2007 Bulletin 2007/49**

(73) Proprietor: **MITSUBISHI RAYON CO., LTD.**
**Tokyo 108-8506 (JP)**

(72) Inventors:
- **HIRAI, Shinya**
  **c/o Mitsubishi Rayon Co., Ltd.**
  **Hiroshima-ken 7390693 (JP)**
- **KASAI, Toshihiro**
  **c/o Mitsubishi Rayon Co., Ltd.**
  **Hiroshima-ken 7390693 (JP)**
- **NAKAYAMA, Masaki**
  **c/o Mitsubishi Rayon Co., Ltd.**
  **Hiroshima-ken 7390693 (JP)**

(74) Representative: **Hollatz, Christian**
**ter Meer Steinmeister & Partner GbR**
**Patentanwälte**
**Mauerkircherstrasse 45**
**81679 München (DE)**

(56) References cited:
**EP-A- 0 448 391**
**EP-A- 1 022 115**
**JP-A- 08 183 808**
**JP-A- 2003 221 421**
**JP-A- 2004 227 843**
**US-A- 3 941 727**
**US-A1- 2004 152 821**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 862 478 B1

## Description

TECHNICAL FIELD

The present invention relates to a resin composition containing polymer particles, and a molded article such as a light diffusing article, a matte molded article .
The present application claims the priority of Japanese Patent Application No. 2005-59176 filed on March 3, 2005 .

BACKGROUND ART

It has been known that various functions are given to a resin by compounding a polymer particle into the resin. For example, in the case of various displays, transmission screens, and covers of lighting fittings, a light diffusing article excellent in light diffusibility has been used owing to the demand that a light source image should not be seen through.
As a material for such a light diffusing article, a light diffusing resin composition in which a polymer particle (light diffusing agent) having prescribed average particle diameter, particle size distribution, refractive index, and the like is dispersed in a transparent resin has been known (for example, refer to Patent Document 1).
Further, as a molded article having a surface gloss being depressed and high designability, a molded article, the base material of which contains a polymer particle having prescribed average particle diameter, particle size distribution, refractive index, and the like, has been known (for example, refer to Patent Document 2).
However, when such a polymer particle as mentioned above is compounded into a resin, the following problems may sometimes occur.

(i) A color tone of a molded article in which a polymer particle is compounded is different from that of a molded article in which a polymer particle is not compounded.
(ii) Thermal stability and resistance to moist heat of a molded article constituted of a resin composition in which a polymer particle is compounded are lowered.

Such molded articles do not have sufficient optical characteristics under high temperature environment and cannot be used under such circumstances. Consequently, the industrial value for using such molded articles is lowered.

Patent Document 1: Japanese Patent Application Laid-Open No. 7-90167
Patent Document 2: Japanese Patent Application Laid-Open No. 2000-212293

DISCLOSURE OF INVENTION

PROBLEM TO BE SOLVED BY THE INVENTION

It is an object of the present invention to provide a resin composition comprising a polymer particle which can suppress change in the color tone of the resin while the one does not lower thermal stability and resistance to moist heat of a molded article obtained from the resin. It is a further object of the present invention to provide a resin composition which can provide a molded article excellent in thermal stability and resistance to moist heat, and the color tone of which has little difference from that of the resin before the polymer particle is compounded. It is a furthermore object of the present invention to provide a molded article which is excellent in thermal stability and resistance to moist heat, and the color tone of which has little difference from that of the resin before the polymer particle is compounded.

MEANS FOR SOLVING THE PROBLEM

The present inventors have found that change in the color tone of a molded article, lowering of thermal stability and resistance to moist heat are caused by a kind of surfactant used in a production of a polymer particle and thus have completed the present invention.
Namely, the polymer particle of the resin composition of the present invention is the one which is obtained by polymerizing a monomer in the presence of a phosphate salt represented by the following formula (1) and which is containing 0.01 to 1.0 part by mass of the phosphate salt in the polymer particle to 100 parts by mass of the polymer particle.
[Chemical formula 1]

$$[R^1-O(R^2O)_m]_n-\overset{\overset{O}{\|}}{P}-(OM)_{3-n} \qquad (1)$$

In the formula (1), $R^1$ represents an alkyl group having 10 to 18 carbon atoms, $R^2$ represents an alkylene group having 2 to 3 carbon atoms, M represents an alkaline metal or an alkaline earth metal, m represents an integer of 1 to 20, and n represents 1 or 2.

The resin composition of the present invention is obtained by compounding the foregoing polymer particle into a resin.
The molded article of the present invention is obtained by molding the foregoing resin composition.

EFFECT OF THE INVENTION

The polymer particle of the resin composition of the present invention can suppress change in the color tone of a molded article when the resin is molded into the molded article and does not lower thermal stability and resistance to moist heat of the molded article thus obtained.
Further, the resin composition of the present invention has little difference in the color tone from that of the resin before the polymer particle is compounded and a molded article using the resin composition is excellent in thermal stability and resistance to moist heat.
Further, the molded article of the present invention (a light diffusing article; a matte molded article) has little difference in the color tone from that of the resin before the polymer particle is compounded and is excellent in thermal stability and resistance to moist heat.

BEST MODE FOR CARRYING OUT THE INVENTION

<Polymer particle>

The polymer particle of the resin composition of the present invention is the one obtained by polymerizing a monomer in the presence of a phosphate salt represented by the foregoing formula (1).
Further, the polymer particle of the present invention is preferably a crosslinked polymer obtained by polymerizing a monomer containing a crosslinking agent.

(Monomer)

As the monomer, a noncrosslinking monomer having one polymerizable double bond, a crosslinking agent, or the like can be listed. As the noncrosslinking monomer, an aromatic vinyl such as styrene or $\alpha$-methyl styrene; a methacrylate such as methyl methacrylate, ethyl methacrylate, n-butyl methacrylate, i-butyl methacrylate, t-butyl methacrylate, cyclohexyl methacrylate, 2-ethylhexyl methacrylate, stearyl methacrylate, lauryl methacrylate, isobornyl methacrylate, benzyl methacrylate, or phenyl methacrylate; an acrylate such as ethyl acrylate, n-butyl acrylate, i-butyl acrylate, t-butyl acrylate, cyclohexyl acrylate, 2-ethylhexyl acrylate, stearyl acrylate, lauryl acrylate, isobornyl acrylate, or benzyl acrylate; an unsaturated nitrile such as acrylonitrile or methacrylonitrile; a vinyl ether such as methyl vinyl ether or butyl vinyl ether; a vinyl halide such as vinyl chloride or vinyl bromide; a vinylidene halide such as vinylidene chloride or vinylidene bromide; a vinyl monomer having a glycidyl group such as glycidyl acrylate, glycidyl methacrylate, allyl glycidyl ether, or ethylene glycol glycidyl ether; a vinyl monomer having a hydroxyl group such as hydroxyethyl methacrylate; or a vinyl monomer having a carbonyl group such as acrylic acid or methacrylic acid can be listed.

As the crosslinking agent, a multifunctional monomer having two or more polymerizable double bonds can be listed. As the multifunctional monomer, an alkylene glycol dimethacrylate such as ethylene glycol dimethacrylate, 1,3-butylene glycol dimethacrylate, 1,4-butylene glycol dimethacrylate, or propylene glycol dimethacrylate; allyl methacrylate; or a polyvinyl benzene such as divinylbenzene or trivinylbenzene can be listed.
The content of the crosslinking agent (multifunctional monomer) is preferably 0.5 to 40% by mass based on 100% by mass of all monomers (noncrosslinking monomer and crosslinking agent) to be used. When the amount of the crosslinking agent to be used is less than 0.5% by mass, for example, a matte effect tends to be lowered in the case that the polymer particle is used as a matting agent or a light diffusing effect tends to be lowered in the case that the polymer particle is used as a light diffusing agent. Further, when the amount of the crosslinking agent to be used is more than 40% by

mass, the effect for improving these properties is small and it leads to an increase in cost.

In the present invention, it is preferable that the foregoing monomer be constituted of a noncrosslinking monomer and a crosslinking agent, and as the noncrosslinking monomer, at least one kind of monomer be used, wherein a Tg of a (co)polymer constituted of the monomer fall within the range of from -10 to 150°C. Here, the Tg of the (co)polymer is obtained by the FOX equation, and the Tg of a homopolymer which is obtained by polymerizing the monomer alone can be calculated by using, for example, the Tg reported in Polymer Data Handbook (published by Baifukan Co., Ltd. in 1986). When a monomer in which the Tg of a (co)polymer constituted of the monomer is less than -10°C is used, for example, a matte effect tends to be lowered in the case that the polymer particle is used as a matting agent. Further, when a monomer in which the Tg of a (co)polymer constituted of the monomer is more than 150°C is used, a surface appearance of a molded article tends to be lowered in the case that the polymer particle is compounded into the resin and molded into the molded article.

(Phosphate salt)

In the foregoing formula (1), $R^1$ represents an alkyl group having 10 to 18 carbon atoms. The number of carbon atoms is preferably 12 or more, and more preferably 16 or less. The alkyl group may be in the form of either straight chain or branched chain. As the alkyl group, n-dodecyl group, n-tridecyl group, n-tetradecyl group, or isotridecyl group is preferable.

In the formula (1), $R^2$ represents an alkylene group having 2 to 3 carbon atoms. The alkylene group may be in the form of either straight chain or branched chain. As the alkylene group, ethylene group or propylene group can be listed. When m is 2 or more in the formula (1), a plurality of different groups may be present as $R^2$. For example, both of ethylene group and propylene group may be present.

In the formula (1), M represents an alkaline metal or an alkaline earth metal. As the alkaline metal, sodium, potassium, lithium, rubidium, or cesium, can be listed.
As the alkaline earth metal, calcium, barium, magnesium, or strontium, can be listed.
Among them, sodium, potassium, calcium, or barium is preferable as M, sodium is more preferable because degradation of the resin to which the polymer particle is added can be reduced.

In the formula (1), m represents an integer of 1 to 20, and is preferably an integer of 3 or more, and preferably 10 or less.
In the formula (1), n represents 1 or 2.

As the phosphate salt in the foregoing formula (1), for example, an alkaline metal (Na or K) salt or an alkaline earth metal (Ca, or Ba) salt of a straight-chain alkyloxypolyoxyethylene phosphoric acid such as mono-n-decyloxytetraoxyethylene phosphoric acid, di-n-decyloxytetraoxyethylene phosphoric acid, mono-n-dodecyloxytetraoxyethylene phosphoric acid, di-n-dodecyloxytetraoxyethylene phosphoric acid, mono-n-tetradecyloxytetraoxyethylene phosphoric acid, di-n-tetradecyloxytetraoxyethylene phosphoric acid, mono-n-hexadecyloxytetraoxyethylene phosphoric acid, di-n-hexadecyloxytetraoxyethylene phosphoric acid, mono-n-octadecyloxytetraoxyethylene phosphoric acid, di-n-octadecyloxytetraoxyethylene phosphoric acid, mono-n-decyloxypentaoxyethylene phosphoric acid, di-n-decyloxypentaoxyethylene phosphoric acid, mono-n-dodecyloxypentaoxyethylene phosphoric acid, di-n-dodecyloxypentaoxyethylene phosphoric acid, mono-n-tetradecyloxypentaoxyethylene phosphoric acid, di-n-tetradecyloxypentaoxyethylene phosphoric acid, mono-n-hexadecyloxypentaoxyethylene phosphoric acid, di-n-hexadecyloxypentaoxyethylene phosphoric acid, mono-n-octadecyloxypentaoxyethylene phosphoric acid, di-n-octadecyloxypentaoxyethylene phosphoric acid, mono-n-decyloxyhexaoxyethylene phosphoric acid, di-n-decyloxyhexaoxyethylene phosphoric acid, mono-n-dodecyloxyhexaoxyethylene phosphoric acid, di-n-dodecyloxyhexaoxyethylene phosphoric acid, mono-n-tetradecyloxyhexaoxyethylene phosphoric acid, di-n-tetradecyloxyhexaoxyethylene phosphoric acid, mono-n-hexadecyloxyhexaoxyethylene phosphoric acid, di-n-hexadecyloxyhexaoxyethylene phosphoric acid, mono-n-octadecyloxyhexaoxyethylene phosphoric acid, di-n-octadecyloxyhexaoxyethylene phosphoric acid, mono-n-decyloxyoctaoxyethylene phosphoric acid, di-n-decyloxyoctaoxyethylene phosphoric acid, mono-n-dodecyloxyoctaoxyethylene phosphoric acid, di-n-dodecyloxyoctaoxyethylene phosphoric acid, mono-n-tetradecyloxyoctaoxyethylene phosphoric acid, di-n-tetradecyloxyoctaoxyethylene phosphoric acid, mono-n-hexadecyloxyoctaoxyethylene phosphoric acid, di-n-hexadecyloxyoctaoxyethylene phosphoric acid, mono-n-octadecyloxyoctaoxyethylene phosphoric acid, or di-n-octadecyloxyoctaoxyethylene phosphoric acid;

an alkaline metal (Na, K, or the like) salt or an alkaline earth metal (Ca, Ba, or the like) salt of a branched-chain alkyloxypolyoxyethylene phosphoric acid such as mono-isodecyloxytetraoxyethylene phosphoric acid, di-isodecyloxytetraoxyethylene phosphoric acid, mono-isododecyloxytetraoxyethylene phosphoric acid, di-isododecyloxytetraoxyethylene phosphoric acid, mono-isotetradecyloxytetraoxyethylene phosphoric acid, di-isotetradecyloxytetraoxyethylene phosphoric acid, mono-isohexadecyloxytetraoxyethylene phosphoric acid, di-isohexadecyloxytetraoxyethylene phosphoric acid, mono-isooctadecyloxytetraoxyethylene phosphoric acid, di-isooctadecyloxytetraoxyethylene phosphoric acid, mono-isodecyloxyhexaoxyethylene phosphoric acid, di-isodecyloxyhexaoxyethylene phosphoric acid, mono-isododecyloxyhexaoxyethylene phosphoric acid, di-isododecyloxyhexaoxyethylene phosphoric acid, mono-isotridecyloxyhexaoxyethylene phosphoric acid, di-isotridecyloxyhexaoxyethylene phosphoric acid, mono-isotetradecyloxyhexaoxyethylene phosphoric acid, di-isotetradecyloxyhexaoxyethylene phosphoric acid, mono-isohexadecyloxyhexaoxyethylene phosphoric acid, di-isohexadecyloxyhexaoxyethylene phosphoric acid, mono-isooctadecyloxyhexaoxyethylene phosphoric acid, di-isooctadecyloxyhexaoxyethylene phosphoric acid, mono-isodecyloxyoctaoxyethylene phosphoric acid, di-isodecyloxyoctaoxyethylene phosphoric acid, mono-isododecyloxyoctaoxyethylene phosphoric acid, di-isododecyloxyoctaoxyethylene phosphoric acid, mono-isotridecyloxyoctaoxyethylene phosphoric acid, di-isotridecyloxyoctaoxyethylene phosphoric acid, mono-isotetradecyloxyoctaoxyethylene phosphoric acid, di-isotetradecyloxyoctaoxyethylene phosphoric acid, mono-isohexadecyloxyoctaoxyethylene phosphoric acid, di-isohexadecyloxyoctaoxyethylene phosphoric acid, mono-isooctadecyloxyoctaoxyethylene phosphoric acid, or di-isooctadecyloxyoctaoxyethylene phosphoric acid;

an alkaline metal (Na, or K) salt or an alkaline earth metal (Ca, or B) salt of a straight-chain alkyloxypolyoxypropylene phosphoric acid such as mono-n-decyloxytetraoxypropylene phosphoric acid, di-n-decyloxytetraoxypropylene phosphoric acid, mono-n-dodecyloxytetraoxypropylene phosphoric acid, di-n-dodecyloxytetraoxypropylene phosphoric acid, mono-n-tetradecyloxytetraoxypropylene phosphoric acid, di-n-tetradecyloxytetraoxypropylene phosphoric acid, mono-n-hexadecyloxytetraoxypropylene phosphoric acid, di-n-hexadecyloxytetraoxypropylene phosphoric acid, mono-n-octadecyloxytetraoxypropylene phosphoric acid, di-n-octadecyloxytetraoxypropylene phosphoric acid, mono-n-decyloxypentaoxypropylene phosphoric acid, di-n-decyloxypentaoxypropylene phosphoric acid, mono-n-dodecyloxypentaoxypropylene phosphoric acid, di-n-dodecyloxypentaoxypropylene phosphoric acid, mono-n-tetradecyloxypentaoxypropylene phosphoric acid, di-n-tetradecyloxypentaoxypropylene phosphoric acid, mono-n-hexadecyloxypentaoxypropylene phosphoric acid, di-n-hexadecyloxypentaoxypropylene phosphoric acid, mono-n-octadecyloxypentaoxypropylene phosphoric acid, di-n-octadecyloxypentaoxypropylene phosphoric acid, mono-n-decyloxyhexaoxypropylene phosphoric acid, di-n-decyloxyhexaoxypropylene phosphoric acid, mono-n-dodecyloxyhexaoxypropylene phosphoric acid, di-n-dodecyloxyhexaoxypropylene phosphoric acid, mono-n-tetradecyloxyhexaoxypropylene phosphoric acid, di-n-tetradecyloxyhexaoxypropylene phosphoric acid, mono-n-hexadecyloxyhexaoxypropylene phosphoric acid, di-n-hexadecyloxyhexaoxypropylene phosphoric acid, mono-n-octadecyloxyhexaoxypropylene phosphoric acid, di-n-octadecyloxyhexaoxypropylene phosphoric acid, mono-n-decyloxyoctaoxypropylene phosphoric acid, di-n-decyloxyoctaoxypropylene phosphoric acid, mono-n-dodecyloxyoctaoxypropylene phosphoric acid, di-n-dodecyloxyoctaoxypropylene phosphoric acid, mono-n-tetradecyloxyoctaoxypropylene phosphoric acid, di-n-tetradecyloxyoctaoxypropylene phosphoric acid, mono-n-hexadecyloxyoctaoxypropylene phosphoric acid, di-n-hexadecyloxyoctaoxypropylene phosphoric acid, mono-n-octadecyloxyoctaoxypropylene phosphoric acid, or di-n-octadecyloxyoctaoxypropylene phosphoric acid; or

an alkaline metal (Na, or K) salt or an alkaline earth metal (Ca, or Ba) salt of a branched-chain alkyloxypolyoxypropylene phosphoric acid such as mono-isodecyloxytetraoxypropylene phosphoric acid, di-isodecyloxytetraoxypropylene phosphoric acid, mono-isododecyloxytetraoxypropylene phosphoric acid, di-isododecyloxytetraoxypropylene phosphoric acid, mono-isotetradecyloxytetraoxypropylene phosphoric acid, di-isotetradecyloxytetraoxypropylene phosphoric acid, mono-isohexadecyloxytetraoxypropylene phosphoric acid, di-isohexadecyloxytetraoxypropylene phosphoric acid, mono-isooctadecyloxytetraoxypropylene phosphoric acid, di-isooctadecyloxytetraoxypropylene phosphoric acid, mono-isodecyloxyhexaoxypropylene phosphoric acid, di-isodecyloxyhexaoxypropylene phosphoric acid, mono-isododecyloxyhexaoxypropylene phosphoric acid, di-isododecyloxyhexaoxypropylene phosphoric acid, mono-isotridecyloxyhexaoxypropylene phosphoric acid, di-isotridecyloxyhexaoxypropylene phosphoric acid, mono-isotetradecyloxyhexaoxypropylene phosphoric acid, di-isotetradecyloxyhexaoxypropylene phosphoric acid, mono-isohexadecyloxyhexaoxypropylene phosphoric acid, di-isohexadecyloxyhexaoxypropylene phosphoric acid, mono-isooctadecyloxyhexaoxypropylene phosphoric acid, di-isooctadecyloxyhexaoxypropylene phosphoric acid, mono-isodecyloxyoctaoxypropylene phosphoric acid, di-isodecyloxyoctaoxypropylene phosphoric acid, mono-isododecyloxyoctaoxypropylene phosphoric acid, di-isododecyloxyoctaoxypropylene phosphoric acid, mono-isotridecyloxyoctaoxypropylene phosphoric acid, di-isotridecyloxyoctaoxypropylene phosphoric acid, mono-isotetradecyloxyoctaoxypropylene phosphoric acid, di-isotetradecyloxyoctaoxypropylene phosphoric acid, mono-isohexadecyloxyoctaoxypropylene phosphoric acid, di-isohexadecyloxyoctaoxypropylene phosphoric acid, mono-isooctadecyloxyoctaoxypropylene phosphoric acid, or di-isooctadecyloxyoctaoxypropylene phosphoric acid can be listed.

These phosphate salts may be used alone in one kind or in combination of two or more kinds.
Further, it may also be able to add a hydroxide of an alkaline metal or an alkaline earth metal to a phosphate, neutralizing the phosphate, to make a desired phosphate salt in the step of polymerizing the monomer.
Further, the phosphate salt may be a mixture of a monoalkyl ester and a dialkyl ester. In this case, the mixing ratio of the monoalkyl ester to the dialkyl ester is not particularly limited. Further, a surfactant of nonphosphate may be included.

As a preferable concrete example of a surfactant including the phosphate salt represented by the foregoing formula (1), "NC-718" manufactured by Sanyo chemical Industries, Ltd., "Phosphanol LS-529", "Phosphanol RS-610NA", "Phosphanol RS-620NA", "Phosphanol RS-630NA", "Phosphanol RS-640NA", "Phosphanol RS-650NA", or "Phosphanol RS-660NA" manufactured by TOHO Chemical Industry Co., Ltd., "LATEMUL P-0404", "LATEMUL P-0405", "LATEMUL P-0406", or "LATEMUL P-0407" manufactured by Kao Corporation, or the like can be listed.

The phosphate salt which is used as a surfactant is contained in the polymer particle by the amount of 0.01 to 1.0 part by mass to 100 parts by mass of the polymer particle.
When this content is 1.0 part by mass or less, decomposition of the resin in which the polymer particle is added tends to be suppressed.
The polymer particle of the present invention is suitably used as a light diffusing agent which is used in molding a light diffusing article such as a light diffusing plate by adding to a thermoplastic resin.
Further, the polymer particle of the present invention is suitably used as a matting agent which is used in molding a matte molded article such as a matte plate by adding to a thermoplastic resin.

(Method for producing polymer particle)

As a method for producing the polymer particle of the present invention, publicly known polymerization methods can be used, and an emulsion polymerization method, a soap-free polymerization method, a seed emulsion polymerization method which uses a polymer particle obtained by these polymerization methods as a seed, a swelling polymerization method, a two-stage swelling polymerization method, or a fine suspension polymerization method, can be listed, and the fine suspension polymerization method is particularly preferable.
The fine suspension polymerization method is a method in which a fine droplet having a particle diameter of 1.0 to 100 μm is formed by forcibly emulsifying a water-based mixture composed of a surfactant containing a monomer and the phosphate salt represented by the foregoing formula (1), water, and an oil-soluble initiator, using a homogenizer, or a homomixer, and then the oil-soluble initiator dissolved in the droplet is decomposed by heating the droplet to generate a radical to advance a radical polymerization. A latex in which the polymer particles are dispersed can be obtained by the fine suspension polymerization method.
Here, the oil-soluble initiator indicates a radical polymerization initiator having solubility to water of less than 0.5% by mass. The initiator to be used is not particularly limited as long as it fulfills this condition and a publicly known initiator, for example, an azo radical initiator such as azonitrile, azoamide, cycloazoamidine, azoamidine, or a macroazo compound, or a peroxide radical initiator such as a ketone peroxide, a peroxyketal, a hydroperoxide, a dialkylperoxide, a diacylperoxide, a peroxy ester, or a peroxy dicarbonate can be used. The amount of the oil-soluble initiator to be used is preferably 0.05 to 1.0 part by mass to 100 parts by mass of the sum of monomers. Further, the amount of water to be used in the water-based mixture is preferably 50 to 1,000 parts by mass to 100 parts by mass of the sum of monomers.
The polymer particle of the present invention can be produced in high productivity by the fine suspension polymerization.
As a method for recovering the polymer particles from the latex in which the polymer particles are dispersed, for example, salting out or acid precipitation and coagulation, spray drying, or freeze drying can be listed. The polymer particles can be recovered as powder by these methods.
The polymer particles are particularly preferably those obtained as powder by spray drying among these methods. The drying method of spray drying is not particularly limited and a publicly known method using two-fluid nozzle type, pressure nozzle type, or rotating disc type, can be used. The outlet temperature of a drying chamber in the spray drying is preferably 50 to 120˚C, and more preferably 60 to 100˚C.
The polymer particles containing the phosphate salt can be obtained in high productivity by recovering the latex, in which the polymer particles obtained by polymerizing a monomer using the phosphate salt as a surfactant are dispersed, as powder by spray drying.

(Refractive index, Particle diameter)

Refractive index and particle diameter of the polymer particle of the present invention preferably fulfill the following formulae (2) and (3), and are preferably different from those of a resin of the base material when the polymer particle is used as a light diffusing agent.

$$1.30 \leq Np \leq 1.80 \qquad \ldots(2)$$

$$0.5 < dp \leq 100 \qquad \ldots(3)$$

In these formulae, Np represents a refractive index [-] of the polymer particle, and dp represents a weight average particle diameter [μm].
In the case that monomer units constituting the polymer particle are more than one kind, refractive index Np

[-] is defined as an average refractive index calculated by the following formula (4) using mass ratios of monomer units constituting the polymer particle.

$$Np = (Wa \times Npa + Wb \times Npb + \cdots) / 100 \qquad ...(4)$$

(In the formula, Wa,Wb, ... represent mass ratios [% by mass] of the monomer units a, b, ... constituting the polymer particle, and Npa, Npb ... represent refractive indices [-] of homopolymers of monomer units a, b, ... constituting the polymer particle.)

(Use)

The polymer particle of the present invention can be used as a light diffusing agent, a matting agent, an anti-blocking agent for a resin film, a filler for cosmetics, a low profile additive, a wear resistance improver, a coating agent, or a heat resistance improver.

<Light diffusing agent, Matting agent>

The light diffusing agent of the present invention is the one constituted of the polymer particle obtained by polymerizing a monomer in the presence of the phosphate salt represented by the formula (1).
Further, the matting agent of the present invention is the one constituted of the polymer particle obtained by polymerizing a monomer in the presence of the phosphate salt represented by the formula (1).

<Resin composition>

The resin composition of the present invention is the one obtained by compounding the polymer particle of the present invention into a resin.
As the resin, a polycarbonate resin; or a thermoplastic resin such as a polyacetal resin, or a thermoplastic elastomer and a polymer alloy of them is used.
Among them, a polycarbonate resin, in particular, is liable to be deteriorated caused by a surfactant contained in the polymer particle which is added to the polycarbonate resin, and hence by adopting to use the polymer particle of the present invention to compose a resin composition, a molded article in which the deterioration by heat has been lowered can be obtained.
Further, the polyacetal resin generates formaldehyde by decomposition at the time of molding, and the decomposition is accelerated owing to a surfactant contained in the polymer particle which is added to the polyacetal resin, and hence by adopting to use the polymer particle of the present invention to compose a resin composition, the generation of formaldehyde at the time of molding can be lowered.
In particular, a resin composition in which the polymer particle of the present invention is compounded to a polyacetal resin can fulfill the following formula (5), wherein A is defined as time (minutes) taken for a reduction of 10% by mass of the resin composition in a thermogravimetry under the conditions of 230°C (constant temperature) and air flow rate of 200 ml/min, and B is defined as a compounding amount (part(s) by mass) of the polymer particle to 100 parts of the polyacetal resin.

$$A \geq -2B + 55 \qquad ...(5)$$

The resin composition which has lowered the decomposition at the time of molding, in particular, at the beginning of molding, can be obtained by adopting the resin composition which fulfills the foregoing formula (5).
As the apparatus which can carry out thermogravimetry under the conditions of 230°C (constant temperature) and air flow rate of 200 ml/min, for example, "TG/DTA 6200" manufactured by Seiko Instruments Inc. can be listed.
Various additives may be compounded into the resin composition of the present invention within the range as long as they do not exert inferior influences on the effect of compounding the polymer particle. As the additives, various stabilizers such as antioxidants and ultraviolet absorbers; flame retardants, lubricants, antistatic agents, inorganic fillers, processing aids, impact strength modifiers, foaming agents, anti-fungus agents, or coloring agents, can be listed.
As a preparation method of the resin composition of the present invention, a method of mixing the resin, the polymer particle, and, when it is needed, an additive with Henschel mixer or a tumbler, followed by melt mixing them

with an extruder, a kneader, or a mixer, a method of mixing other components one after another to a previously melt component, can be listed.

<Molded article>

The molded article of the present invention is the one obtained by molding the resin composition of the present invention. The molded article constituted of the resin composition containing the polymer particle of the present invention has a color tone which has little difference from that of the resin before the polymer particle is compounded, and is excellent in thermal stability and resistance to moist heat.

As the method of molding, an extrusion molding method, an injection molding method, a calendar molding method, a blow molding method, a cast molding method, a press molding method, or a vacuum molding method, can be listed.

The molded article of the present invention can be suitably used for light diffusing plates and light diffusing films of various displays; low gloss members such as covers of lighting fixtures and lighting boards, the main purpose of which is light diffusing, and OA housings, and interior parts of automobile.

EXAMPLES

Hereinafter, the present invention will be explained by examples.

(Weight average particle diameter, Number average particle diameter)

The weight average particle diameter and the number average particle diameter of the polymer particle were measured using Laser Diffraction/Scattering Particle Size Distribution Analyzer ("LA-910" manufactured by Horiba, Ltd.).

(Polymerization reactor in the synthesizing examples 1 to 4)

As a polymerization reactor, a 3L, 4-necked separable glass flask equipped with a full-zone stirring blade, a thermometer, a condenser tube, and a nitrogen introduction tube was used. The ratio of a diameter of an upper blade of the stirring blade d1 to a diameter of the flask D, namely d1/D, was 0.55, and the ratio of a diameter of a lower blade of the stirring blade d2 to a diameter of the flask D, namely d2/D, was 0.60, and two baffle plates were attached.

(Measurement of solid content)

The amount of solid was calculated from a mass of a residue obtained by drying a sample solution in a hot air dryer at 180˚C for 30 minutes.

(Total light transmittance)

A total light transmittance of a molded article was measured according to JIS K 7105 method B using an integrating-sphere reflection transmittance meter ("RT-100" manufactured by Murakami Color Research Laboratory Co., Ltd.)

(Light diffusibility)

A light diffusibility of a molded article was measured according to DIN 5036 using a goniophoto meter ("GP-200" manufactured by Murakami Color Research Laboratory Co., Ltd.).

(Measurement of yellowness index (YI))

Yellowness index of a molded article was measured according to JIS K 7105 using a variable-illumination color meter ("SM-T" manufactured by Suga Test Instruments Co., Ltd.) in a reflection mode.

(Evaluation of color tone)

Evaluation of color tone was carried out based on the difference between yellowness index of a molded article which does not contain the polymer particle ($YI_0$), which is taken as a standard, and yellowness index of a molded article which contains the polymer particle (YI) (the difference ($YI_0$-YI) being a change of yellowness index: ΔYI).

(Weight average molecular weight)

Weight average molecular weight of a molded article was measured using size exclusion chromatograph ("HLC-8020" manufactured by Tosoh Corporation) under the following conditions.
Eluant: chloroform, column: "GMHHR" (2 sets) manufactured by Tosoh Corporation, flow speed: 1 ml/min, sample concentration: 1 mg/ml, injected amount: 100 μl, standard polymer: polystyrene.

(Measurement of melt volume flow rate (MVR))

MVR of a molded article was measured according to JIS K 7210 using melt flow rate tester ("FULL AUTOMATIC MELT FLOW INDEX TESTER " manufactured by Yasuda Seiki Seisakusho, Ltd.) under the conditions of load: 1.2 kg and temperature: 300˚C.

(Evaluation of thermal stability 1)

A pellet obtained from a resin composition was caused to stay (be left alone) in a cylinder (temperature: 300˚C) of an injection molding machine and then molded after 10 minutes. Evaluation of thermal stability was carried out based on the differences between MVR and weight average molecular weight of a molded article obtained from the pellet which had been set to stay in the cylinder and those of a molded article obtained from the pellet which had not been set to stay in the cylinder.

(Evaluation of thermal stability 2)

Evaluation of thermal stability was carried out by heating a pellet obtained from a resin composition using Thermo-Gravimetric/Differential Thermal Analyzer ("TG/DTA 6200" manufactured by Seiko Instruments Inc.) under the conditions of 230˚C (constant temperature) and air flow rate of 200 ml/min, and measuring a time taken for the reduction of its 10% mass.

(Evaluation of resistance to moist heat)

Evaluation of resistance to moist heat of an obtained molded article was carried out, using Highly-Accelerated Temperature & Humidity Stress Test Chamber (pressure cooker) ("PC-422R7" manufactured by Hirayama Manufacturing Corporation) under the conditions of 120˚C, 100% humidity, 2 atmospheric pressure, and being left alone for 24 hours, based on the difference between weight average molecular weight of a molded article before the test and that after the test.

Synthesizing Example 1

(Preparation of seed latex (a1))

To a polymerization reactor, 360.0 g of pure water, 83.0 g of n-butyl methacrylate, and 55.0 g of styrene were charged. Subsequently, the number of revolutions of stirring was set to 110 rpm, the inside of the polymerization reactor was heated to 82˚C, 102.0 g of aqueous potassium persulfate solution (2.0 g of potassium persulfate being dissolved in 100 g of pure water) was charged, and polymerization was started. After 3 hours from the start of the polymerization, 50.3 g of aqueous potassium persulfate solution (0.3 g of potassium persulfate being dissolved in 50 g of pure water) was charged to the polymerization reactor, and then a mixture obtained by previously emulsifying 248.0 g of n-butyl methacrylate, 166.0 g of styrene, 1.6 g of polyoxyethylenealkylether phosphoric acid sodium salt (trade name: "Phosphanol RS-610NA", manufactured by TOHO Chemical Industry Co., Ltd.) as the phosphate salt represented by the foregoing formula (1), and 550.0 g of pure water using a mixer "Ultra-Turrax T-25" manufactured by IKA-Werke GmbH & Co. KG at 12,000 rpm for 2 minutes was dropped into the polymerization reactor, taking 210 minutes. The temperature inside the reactor during the dropping was maintained at 82˚C. After the dropping was finished, the temperature inside the polymerization reactor was maintained at 82˚C for 2 hours to obtain seed latex (a1). Solid content of the obtained seed latex (a1) was 34.2% by mass, and weight average particle diameter and number average particle diameter of the polymer particle in the seed latex (al) were 1.2 μm and 1.1 μm, respectively.

(Preparation of polymer particle (A1))

To the polymerization reactor, 200.0g of the seed latex (al) was charged. To it, a mixture obtained by previously emulsifying 10.0 g of 1-chlorododecane, 3.1 g of benzoyl peroxide, 20.0 g of styrene, 0.8 g of polyoxyethylenealkylether

phosphoric acid sodium salt (trade name: "Phosphanol RS-610NA", manufactured by TOHO Chemical Industry Co., Ltd.) as the phosphate salt represented by the foregoing formula (1), and 100.0 g of pure water using a mixer "Ultra-Turrax T-25" manufactured by IKA-Werke GmbH & Co. KG at 12,000 rpm for 2 minutes was charged, and then 27.0 g of acetone was further charged. Then, the polymerization reactor was maintained for 3 hours with its inside temperature at 25˚C and the number of revolutions of stirring at 120 rpm. After removing acetone in the polymerization reactor by vacuum evaporation, a mixture obtained by previously emulsifying 370.0 g of n-butyl methacrylate, 227.0 g of styrene, 39.0 g of divinylbenzene, 5.0 g of polyoxyethylenealkylether phosphoric acid sodium salt (trade name: "Phosphanol RS-610NA", manufactured by TOHO Chemical Industry Co., Ltd.) as the phosphate salt represented by the foregoing formula (1), and 1544.0 g of pure water using a mixer "Ultra-Turrax T-25" manufactured by IKA-Werke GmbH & Co. KG at 12,000 rpm for 2 minutes was collectively charged to the polymerization reactor, and the polymerization reactor was maintained for 18 hours with its inside temperature at 25˚C and number of revolutions of stirring at 120 rpm. Subsequently, the number of revolutions of stirring was set at 85 rpm, and the temperature inside the polymerization reactor was raised to 85˚C. When 1 hour passed after the raising of the temperature, an aqueous solution obtained by dissolving 3.6 g of polyoxyethylenealkylether phosphoric acid sodium salt (trade name: "Phosphanol RS-610NA", manufactured by TOHO Chemical Industry Co., Ltd.) as the phosphate salt represented by the foregoing formula (1) into 500.0 g of pure water was charged in the polymerization reactor and the system was maintained at the same conditions for further 5 hours. Solid content of the obtained latex was 23.9% by mass, and weight average particle diameter and number average particle diameter of the polymer particle in the latex were 2.3 $\mu$m and 1.9 $\mu$m, respectively.
The obtained latex was spray dried using a spray dryer ("L18 type" manufactured by Ohkawara Kakohki Co., Ltd.) under the conditions of inlet temperature: 170˚C, outlet temperature: 68˚C, and the number of revolutions of an atomizer: 20,000 rpm to obtain the polymer particle (A1) (refractive index: 1.53).
The monomer used in the present production example was such that a Tg, obtained by the FOX equation, of a (co) polymer constituted of the monomer was 52˚C
Further, in the present production example, all the phosphate salt used remained in the polymer because the polymer particle was recovered by spray drying after the polymerization. In the present production example, the amount of the phosphate salt contained in the polymer particle was 0.8 parts by mass to 100 parts by mass of the polymer.

Synthesizing Example 2

(Preparation of polymer particle (A2))

To the polymerization reactor, 60.0g of the seed latex (al) obtained in Synthesizing examples 1 was charged. To it, a mixture obtained by previously emulsifying 12.0 g of 1-chlorododecane, 2.0 g of benzoyl peroxide, 20.0 g of styrene, 0.7 g of polyoxyethylenealkylether phosphoric acid sodium salt (trade name: "Phosphanol RS-610NA", manufactured by TOHO Chemical Industry Co., Ltd.) as the phosphate salt represented by the foregoing formula (1), and 100.0 g of pure water using a mixer "Ultra-Turrax T-25" manufactured by IKA-Werke GmbH & Co. KG at 12,000 rpm for 2 minutes was charged, and then 30.0 g of acetone was further charged. Then, the polymerization reactor was maintained for 3 hours with its inside temperature at 25˚C and the number of revolutions of stirring at 120 rpm. After removing acetone in the polymerization reactor by vacuum evaporation, a mixture obtained by previously emulsifying 400.0 g of n-butyl methacrylate, 250.0 g of styrene, 70.0 g of ethylene glycol dimethacrylate, 5.0 g of polyoxyethylenealkylether phosphoric acid sodium salt (trade name: "Phosphanol RS-610NA", manufactured by TOHO Chemical Industry Co., Ltd.) as the phosphate salt represented by the foregoing formula (1), and 1660.0 g of pure water using a mixer "Ultra-Turrax T-25" manufactured by IKA-Werke GmbH & Co. KG at 12,000 rpm for 2 minutes was collectively charged to the polymerization reactor, and the polymerization reactor was maintained for 18 hours with its inside temperature at 25˚C and number of revolutions of stirring at 120 rpm. Subsequently, the number of revolutions of stirring was set at 85 rpm, and the temperature inside the polymerization reactor was raised to 85˚C. When 1 hour passed after the raising of the temperature, an aqueous solution obtained by dissolving 4.0 g of polyoxyethylenealkylether phosphoric acid sodium salt (trade name: "Phosphanol RS-610NA", manufactured by TOHO Chemical Industry Co., Ltd.) as the phosphate salt represented by the foregoing formula (1) into 600.0 g of pure water was charged in the polymerization reactor and the system was maintained at the same conditions for further 5 hours. Solid content of the obtained latex was 24.2% by mass, and weight average particle diameter and number average particle diameter of the polymer particle in the latex were 4.0 $\mu$m and 3.2 $\mu$m, respectively.
The obtained latex was spray dried using a spray dryer ("L8 type" manufactured by Ohkawara Kakohki Co., Ltd.) under the conditions of inlet temperature: 170˚C, outlet temperature: 68˚C, and the number of revolutions of an atomizer: 20,000 rpm to obtain the polymer particle (A2) (refractive index: 1.53). Further, the noncrosslinking monomer used in the present production example was such that a Tg, obtained by the FOX equation, of a (co)polymer constituted of the noncrosslinking monomer was 52˚C.
The monomer used in the present production example was such that a Tg, obtained by the FOX equation, of a (co)polymer constituted of the monomer was 52°C.
In the present production example, the amount of the phosphate salt contained in the polymer particle was 0.8 parts by mass to 100 parts by mass of the polymer.

Synthesizing Example 3

(Preparation of seed latex (b1))

The same procedure of the preparation of the seed latex as in Synthesizing Example 1 was carried out except that polyoxyethylenealkylether phosphoric acid sodium salt (trade name: "Phosphanol RS-610NA", manufactured by TOHO Chemical Industry Co., Ltd.) was changed to sodium dodecylbenzenesulfonate to obtain seed latex (b1).

(Preparation of polymer particle (B1))

The same procedure of the preparation of the polymer particle as in Synthesizing Example 1 was carried out except that the seed latex (al) of Synthesizing Example 1 was changed to the seed latex (b1) and polyoxyethylenealkylether phosphoric acid sodium salt (trade name: "Phosphanol RS-610NA", manufactured by TOHO Chemical Industry Co., Ltd.) was changed to sodium dodecylbenzenesulfonate to obtain polymer particle (B1).

Synthesizing Example 4

(Preparation of polymer particle (B2))

The same procedure of the preparation of the polymer particle as in Synthesizing Example 2 was carried out except that the seed latex (a1) of Synthesizing Example 2 was changed to the seed latex (b1) and polyoxyethylenealkylether phosphoric acid sodium salt (trade name: "Phosphanol RS-610NA", manufactured by TOHO Chemical Industry Co., Ltd.) was changed to sodium dodecylbenzenesulfonate to obtain polymer particle (B2).

Synthesizing Example 5

(Preparation of polymer particle (C1))

To a 1L reaction vessel equipped with a thermometer, a stirring rod, and a condenser tube, 500 g of pure water was introduced. To it, a homogeneous mixture of 85.0 g of n-butyl methacrylate, 5.0 g of n-butyl acrylate, 10.0 g of ethylene glycol dimethacrylate, 0.4 g of polyoxyethylenealkylether phosphoric acid sodium salt (trade name: "Phosphanol RS-610NA", manufactured by TOHO Chemical Industry Co., Ltd.) as the phosphate salt represented by the foregoing formula (1), and 0.20 g of organic peroxide (trade name: "PEROCTA O", manufactured by NOF Corporation) was charged. Subsequently, the mixture was emulsified using a mixer ("Ultra-Turrax T-25" manufactured by IKA-Werke GmbH & Co. KG) at 12,000 rpm for 2 minutes to obtain an emulsifying dispersion. The resultant dispersion was heated using a hot water bath at 65°C for 3 hours while stirred at 200 rpm, and further heated to 80°C and kept at 80°C for 1 hour to complete the polymerization.
The obtained polymer dispersion was cooled to an ambient temperature and filtrated using a 300 mesh nylon filter. The obtained filtrate was spray dried using a spray dryer ("L8 type" manufactured by Ohkawara Kakohki Co., Ltd.) under the conditions of inlet temperature: 190°C, outlet temperature: 80°C, and the number of revolutions of atomizer: 20,000 rpm to obtain polymer particle (C1). The weight average particle diameter of the polymer particle (C1) was 8.7 $\mu$m.
The monomer used in the present production example was such that a Tg, obtained by the FOX equation, of a (co) polymer constituted of the monomer was 20°C.
In the present production example, the amount of the phosphate salt contained in the polymer particle was 0.4 parts by mass to 100 parts by mass of the polymer.

Synthesizing Example 6

(Preparation of polymer particle (D 1))

The same procedure of the preparation of the polymer particle as in Synthesizing Example 5 was carried out except that polyoxyethylenealkylether phosphoric acid sodium salt (trade name: "Phosphanol RS-61 0NA", manufactured by TOHO Chemical Industry Co., Ltd.) was changed to sodium dialkyl sulfosuccinate (trade name: "Pelex OT-P", manufactured by Kao Corporation) to obtain polymer particle (D1).

Examples 1 to 4

To 100 parts of a polycarbonate resin ("Panlite L-1225WP" manufactured by Teijin Chemicals Ltd.), the polymer particle (A1) or (A2) was compounded by the amount shown in Table 1, and the resultant mixture was melt kneaded at 280˚C using a twin-screw extruder to obtain a pellet. The obtained pellet was molded to obtain a test piece of 100 mm in length, 50 mm in width, and 2 mm in thickness using an injection molding machine at 280˚C, and total light transmittance and light diffusibility were measured. Further, evaluation of color tone, thermal stability (evaluation of thermal stability 1), and resistance to moist heat were carried out on the obtained test piece. The results are shown in Table 1.

Comparative Examples 1 and 2

The same procedure of the preparation of the test pieces and the respective evaluations as in Example 1 was carried out except that the polymer particle (A1) in Example 1 was changed to the polymer particle (B1) or the polymer particle (B2). The results are shown in Table 1

**Table 1**

| | | Ex. 1 | Ex. 2 | Ex. 3 | Ex. 4 | Comp. Ex. 1 | Comp. Ex.2 |
|---|---|---|---|---|---|---|---|
| Polycarbonate resin (part by mass) | | 100 | 100 | 100 | 100 | 100 | 100 |
| Polymer particle | Kind | A1 | A1 | A1 | A2 | B1 | B2 |
| | Compounding amount (part by mass) | 1 | 2 | 3 | 2 | 2 | 2 |
| Total light transmittance (%) | | 81 | 69 | 62 | 74 | 72 | 75 |
| Light diffusibility (-) | | 40 | 62 | 76 | 54 | 57 | 52 |
| Appearance | ΔYI | - 10 | - 9 | - 2 | - 10 | 2 | 2 |
| Thermal stability | Difference in weight average molecular weight ($\times 10^3$) between samples before and after the test | 0.1 | 0.1 | 0.1 | 0.1 | 1.3 | 1.4 |
| | Difference in MVR ($cm^3$/10min) between samples before and after the test | 0.7 | 0.7 | 0.7 | 0.8 | 8.6 | 9.0 |
| Resistance to moist heat | Difference in weight average molecular weight ($\times 10^3$) between samples before and after the test | 0.1 | 0.1 | 0.1 | 0.1 | 1.1 | 1.1 |

The molded articles of Examples 1 to 4 were excellent in appearance of the molded articles (changes of yellowness indices being small) while maintaining good balance between total light transmittance and light diffusibility, and showed only small differences in weight average molecular weight and MVR between the respective molded articles before the tests of thermal stability and resistance to moist heat and those after the tests, and had excellent thermal stability and resistance to moist heat.
On the other hand, the molded articles of Comparative Examples 1 and 2 showed large differences in weight average molecular weight and MVR between the respective molded articles before the tests of thermal stability and resistance to moist heat and those after the tests, though they had good balance between total light transmittance and light diffusibility.

Example 5

To 100 parts of a polycarbonate resin ("Iupilon S-3000F" manufactured by Mitsubishi Engineering-Plastics Corporation), 10 parts of the polymer particle (C1), and 0.2 parts of "Adekastab AO-60" manufactured by Asahi Denka

Kogyo K.K. and 0.2 parts of "Mark PEP-36" manufactured by Asahi Denka Kogyo K.K. as antioxidants were compounded, and the resultant mixture was melt kneaded at 280˚C using a twin-screw extruder to obtain a pellet. The obtained pellet was molded to obtain a test piece of 80 mm in length, 50 mm in width, and 3 mm in thickness using an injection molding machine at 280˚C, and glossiness was measured by using a gloss meter ("GLOSS METER (Measuring item: angles of 60˚-60˚)" manufactured by Nippon Denshoku Industries Co., Ltd.), and evaluation of color tone was carried out. The obtained results are shown in Table 2.

Comparative Example 3

The same procedure of the preparation of the test piece and the respective evaluations as in Example 5 was carried out except that the polymer particle (C1) in Example 5 was changed to the polymer particle (D1). The results are shown in Table 2.

Table 2

| | | Example 5 | Comparative Example 3 |
|---|---|---|---|
| Polycarbonate resin | | 100 | 100 |
| Polymer particle | Kind | C1 | D1 |
| | Compounding amount (part by mass) | 10 | 10 |
| Glossiness (-) | | 21 | 23 |
| Appearance | ΔYI | -6 | 21 |

The glossiness of the molded article of Example 5 was 21 (the glossiness of the molded article which does not contain the polymer particle being 176), and the change of yellowness index (ΔYI) of the molded article of Example 5 was -3, and hence the molded article of Example 5 had excellent matte performance and, further, excellent appearance of the molded article.

On the other hand, the molded article of Comparative Example 3 had large change of yellowness index and showed a problem in appearance, though it showed excellent matte performance (the glossiness being 23).

Examples 6 and 7

To 100 parts of polyacetal resin ("Duracon M90-34" manufactured by Polyplastics Co., Ltd.), the polymer particle (C1) was compounded by the amount shown in Table 3, and the resultant mixture was melt kneaded at 200˚C using a twin- screw extruder to obtain a pellet. The obtained pellet was molded to obtain a test piece of 80 mm in length, 50 mm in width, and 3 mm in thickness using an injection molding machine at 200˚C, and glossiness was measured by using a gloss meter ("GLOSS METER (Measuring item: angles of 60˚-60˚)" manufactured by Nippon Denshoku Industries Co., Ltd.), and evaluation of thermal stability (evaluation of thermal stability 2) was carried out. The obtained results are shown in Table 3.

Comparative Examples 4 and 5

The same procedure of the preparation of the test piece and the respective evaluations as in Example 6 was carried out except that the polymer particle (C1) in Example 6 was changed to the polymer particle (D1). The results are shown in Table 3.

Table 3

| | Example 6 | Example 7 | Comparative Example 4 | Comparative Example 5 |
|---|---|---|---|---|
| Polyacetal resin | 100 | 100 | 100 | 100 |

(continued)

| | | Example 6 | Example 7 | Comparative Example 4 | Comparative Example 5 |
|---|---|---|---|---|---|
| Polymer particle | Kind | C1 | C1 | D1 | D1 |
| | Compounding amount (part by mass) : B | 5 | 10 | 5 | 10 |
| Glossiness (-) | | 40 | 25 | 42 | 28 |
| Appearance | ΔYI | - 1 | -1 | 1 | 1 |
| Thermal stability | Time taken for a 10% reduction of mass (min) : A | 53 | 42 | 40 | 30 |
| | A≥ -2B + 55 : formula (5) | ○ | ○ | × | × |

The glossiness of the molded articles of Examples 6 and 7 were 40 and 25, respectively (the glossiness of the molded article which does not contain the polymer particle being 86), and the changes of yellowness index (ΔYI) of both these molded articles were -1, and time taken for a 10% reduction of mass of these molded articles were 53 minutes and 42 minutes, respectively. In both cases, the resin compositions fulfilled the formula (5), and these molded articles were not only excellent in resistance to decomposition at the time of molding but also excellent in matte performance and appearance, and further had extremely excellent thermal stability.
On the other hand, the molded articles of Comparative Examples 4 and 5 did not fulfill the relation of the formula (5) and were not only inferior in resistance to decomposition at the time of molding but also inferior in thermal stability, though matte performance and appearance of the molded article were good (the glossiness being 42 and 28, respectively).

INDUSTRIAL APPLICABILITY

The polymer particle according to the present invention can suppress change in the color tone of a resin when compounded into the resin while the one does not lower thermal stability and resistance to moist heat of a molded article obtained from the resin. The polymer particle according to the present invention can be expected to be used as, a matting agent, an anti-blocking agent for a resin film, a filler for cosmetics, a low profile additive, a wear resistance improver, a coating agent, a heat resistance improver, or the like other than a light diffusing agent. Further, the molded article containing the polymer particle of the present invention can be suitably used for light diffusing plates and light diffusing films of various displays; and members, the main purpose of which is light diffusing, such as covers of lighting fixtures and lighting boards.

## Claims

**1.** A thermoplastic resin composition obtained by compounding a polymer particle obtained by polymerizing a monomer in the presence of a phosphate salt represented by the following formula (1) and containing 0.01 to 1.0 part by mass of the phosphate salt in the polymer particle to 100 parts by mass of the polymer particle:

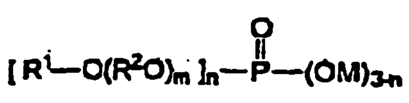 (1)

wherein $R^1$ represents an alkyl group having 10 to 18 carbon atoms, $R^2$ represents an alkylene group having 2 to 3 carbon atoms, M represents an alkaline metal or an alkaline earth metal, m represents an integer of 1 to 20, and n represents 1 or 2,
**characterized in that** a number average particle diameter of the polymer particle to be measured by a laser diffraction/scattering particle size distribution analyzer is 1 to 100 μm, into a thermoplastic resin, wherein the thermoplastic resin is at least one kind selected from a polycarbonate resin and a polyacetal resin.

2. The thermoplastic resin composition according to claim 1, wherein the phosphate salt contained in the polymer particle is a sodium salt of phosphate.

3. The thermoplastic resin composition according to claim 1, wherein the monomer comprises a noncrosslinking monomer and a crosslinking agent, and wherein at least one kind of monomer producible a (co)polymer having a $T_g$, obtained by the FOX equation, falling within the range of from -10 to 150°C is used as the noncrosslinking monomer.

4. A molded article obtained by molding the thermoplastic resin composition of claim 1.

**Patentansprüche**

1. Thermoplastische Harzzusammensetzung, erhalten durch Compoundieren eines Polymerteilchens, erhalten durch Polymerisieren eines Monomeren in Gegenwart eines Phosphatsalzes, das durch die folgende Formel (1) wiedergegeben wird, und enthaltend 0,01 bis 1,0 Masseteile des Phosphatsalzes in dem Polymerteilchen zu 100 Masseteilen des Polymerteilchens:

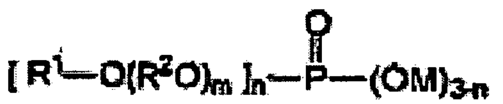 (1)

worin $R^1$ eine Alkylgruppe mit 10 bis 18 Kohlenstoffatomen bedeutet, $R^2$ eine Alkylengruppe mit 2 bis 3 Kohlenstoffatomen bedeutet, M ein Alkalimetall oder ein Erdalkalimetall bedeutet, m eine ganze Zahl von 1 bis 20 bedeutet, und n 1 oder 2 bedeutet,
**dadurch gekennzeichnet, dass** ein zahlenmittlerer Teilchendurchmesser des Polymerteilchens, wie durch ein Laserdiffraktion-/Streuung-Teilchengrößenverteilungs-Analysengerät zu messen, 1 bis 100 μm beträgt, in ein thermoplastisches Harz, wobei das thermoplastische Harz mindestens eine Art ist, gewählt aus einem Polycarbonatharz und einem Polyacetalharz.

2. Thermoplastische Harzzusammensetzung nach Anspruch 1, wobei das in dem Polymerteilchen enthaltene Phosphatsalz ein Phosphat-Natriumsalz ist.

3. Thermoplastische Harzzusammensetzung nach Anspruch 1, wobei das Monomer ein nichtvernetzendes Monomer und ein Vernetzungsmittel umfasst, und wobei mindestens eine Art eines Monomeren, das ein (Co)Polymer mit einer $T_g$, erhalten durch die FOX-Gleichung, die innerhalb des Bereichs von -10 bis 150°C fällt, bilden kann, als das nichtvernetzende Monomer verwendet wird.

4. Formteil, erhalten durch Formen der thermoplastischen Harzzusammensetzung nach Anspruch 1.

**Revendications**

1. Composition de résine thermoplastique obtenue en mélangeant une particule de polymère obtenue par la polymérisation d'un monomère en présence d'un sel de phosphate représenté par la formule (1) suivante et comprenant de 0,01 à 1,0 partie en poids du sel de phosphate dans la particule de polymère pour 100 parties en poids de la particule de polymère :

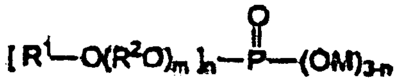 (1)

dans laquelle $R^1$ représente un groupe alkyle comprenant de 10 à 18 atomes de carbone, $R^2$ représente un groupe alkylène comprenant de 2 à 3 atomes de carbone, M représente un métal alcalin ou un métal alcalino-terreux, m représente un nombre entier de 1 à 20, et n vaut 1 ou 2,

**caractérisée en ce qu'**un diamètre de particule moyen en nombre de la particule de polymère à mesurer par un analyseur de distribution de taille de particule par diffusion/diffraction laser est compris dans la plage allant de 1 à 100 $\mu$m, dans une résine thermoplastique, la résine thermoplastique étant au moins un type choisi parmi une résine de polycarbonate et une résine de polyacétal.

**2.** Résine thermoplastique selon la revendication 1, dans laquelle le sel de phosphate contenu dans la particule de polymère est un sel sodique de phosphate.

**3.** Résine thermoplastique selon la revendication 1, dans laquelle le monomère comprend un monomère non réticulant et un agent de réticulation, et dans laquelle au moins un type de monomère produisant un (co)polymère ayant une Tg, obtenue par l'équation de FOX, comprise dans la plage allant de -10 à 150 °C, est utilisé sous forme de monomère non réticulant.

**4.** Article moulé obtenu par moulage de la composition de résine thermoplastique selon la revendication 1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005059176 A
- JP 7090167 A
- JP 2000212293 A